# EUROPEAN PATENT APPLICATION

(11) **EP 3 306 807 A1**
(43) Date of publication of application: **11.04.2018**
(21) Application number: 16803271.2
(22) Date of filing: 27.05.2016
(51) Int. Cl.: H02P 6/17, A47L 9/28

(54) **DC-BRUSHLESS-MOTOR CONTROL DEVICE**

(30) Priority: 29.05.2015 US 201562168139 P
(71) Applicant: Nidec Corporation, Kyoto-shi, Kyoto 601-8205 (JP)
(72) Inventor: NAKAMACHI,Nobuo, Kyoto-shi Kyoto 601-8205 (JP); HARA,Yasoya, Kyoto-shi Kyoto 601-8205 (JP)
(74) Representative: Stöckeler, Ferdinand
(86) International application number: PCT/JP2016/065781
(87) International publication number: WO 2016/194836

(57) **Abstract**

Provided is a DC-brushless-motor control device that supplies a current to windings of a stator of a three-phase DC brushless motor which rotates a suction fan of a suction apparatus, the device including: a control unit that controls a rotation speed of a rotor; an operation detection unit that detects an operation on the suction apparatus; and a storage unit in which information indicating a target rotation speed of the rotor is stored by being divided into a plurality of rotation speed levels corresponding to the operation detected by the operation detection unit, in which the control unit controls the rotation speed of the rotor by feedback of the rotation speed of the rotor or by feedback of the current value supplied to the windings in a case where the rotation speed of the rotor that is indicated by a cycle of movement of a magnetic pole position detected by a magnetic pole position detection unit exceeds the target rotation speed corresponding to the operation detected by the operation detection unit.

## Description

### Technical Field

The present invention relates to a DC-brushless-motor control device.

### Background Art

In the related art, an electric blower that controls electric power or a rotation speed of the electric blower based on a current or a negative pressure of the electric blower, has been known (for example, PTL 1).

### Citation List

### Patent Literature

PTL 1: Japanese Unexamined Patent Application Publication No. 08-215119

### Summary of Invention

### Technical Problem

However, there is a problem in that an optimal control is not sufficiently performed without a variation in a threshold value of the current or the negative pressure of the electric blower.

The present invention has been made in consideration of the above-described circumstance, and an object of the present invention is to provide a user-friendly DC-brushless-motor control device.

### Solution to Problem

According to an embodiment of the present invention, there is provided a DC-brushless-motor control device that supplies a current to windings of a stator of a three-phase DC brushless motor which rotates a suction fan of a suction apparatus, the device including: a three-phase bridge inverter unit that includes arms with each of phases, each of which switching elements are connected to each other in series and each of which a connection point between the switching elements is connected to one end of each of the windings; a control unit that controls a rotation speed of a rotor by controlling each of a conduction state of a first switching element among the switching elements and a conduction state of a second switching element among the switching elements based on a magnetic pole position detected by a magnetic pole position detection unit which detects a magnetic pole position of the rotor of the three-phase DC brushless motor, the first switching element being provided on one side of the connection point, the second switching element being provided on the other side of the connection point, and the switching elements being included in each of the arms; an operation detection unit that detects an operation on the suction apparatus; and a storage unit in which information indicating a target rotation speed of the rotor is stored by being divided into a plurality of rotation speed levels corresponding to the operation detected by the operation detection unit, in which the control unit controls the rotation speed of the rotor by feedback of the rotation speed of the rotor or by feedback of the current value supplied to the windings in a case where the rotation speed of the rotor that is indicated by a cycle of movement of the magnetic pole position detected by the magnetic pole position detection unit exceeds the target rotation speed corresponding to the operation detected by the operation detection unit.

### Advantageous Effects of Invention

According to the embodiment of the present invention, it is possible to provide a DC-brushless-motor control device capable of performing an optimum control according to various target rotation speeds.

### Brief Description of Drawings

[Fig. 1] Fig. 1 is a diagram illustrating an example of an external view of a suction apparatus according to the present embodiment.
[Fig. 2] Fig. 2 is a diagram illustrating an example of a functional configuration of the suction apparatus according to the present embodiment.
[Fig. 3] Fig. 3 is a diagram illustrating an example of configurations of a three-phase bridge inverter unit and a three-phase DC brushless motor that are provided in the suction apparatus according to the present embodiment.
[Fig. 4] Fig. 4 is a diagram illustrating an example of a structure of the three-phase DC brushless motor.
[Fig. 5] Fig. 5 is a diagram illustrating an example of a voltage waveform of the three-phase bridge inverter unit.
[Fig. 6] Fig. 6 is a diagram illustrating an example of a relationship between a target rotation speed and a rotation speed of a rotor that is controlled by an MCU.
[Fig. 7] Fig. 7 is a diagram illustrating an example of a cycle of movement of a magnetic pole position detected by a magnetic pole position detection unit.
[Fig. 8] Fig. 8 is a diagram illustrating two operation modes of the MCU.

### Description of Embodiments

Hereinafter, a suction apparatus 1 according to an embodiment of the present invention will be described with reference to the accompanying drawings.

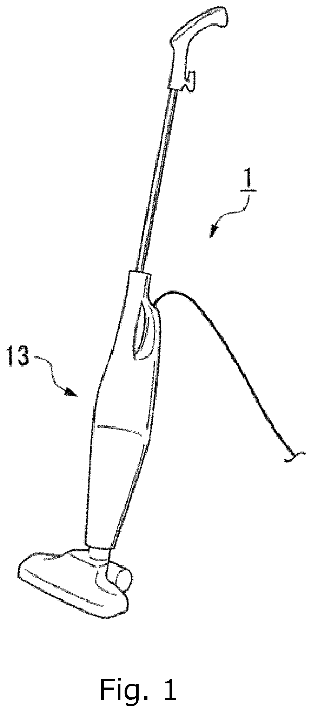

Fig. 1 is a diagram illustrating an example of an external view of the suction apparatus 1 according to the present embodiment. The suction apparatus 1 includes an operation switch 13.

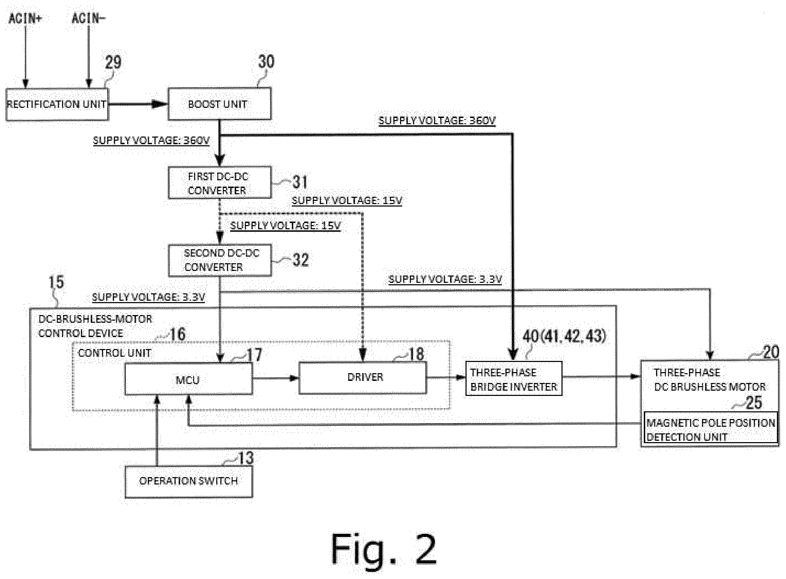

Fig. 2 is a diagram illustrating an example of a functional configuration of the suction apparatus 1 according to the present embodiment.

The suction apparatus 1 includes an operation switch 13, a DC-brushless-motor control device 15, a three-phase DC brushless motor 20, a rectification unit 29, a boost unit 30, a first DC-DC converter 31, and a second DC-DC converter 32. The DC-brushless-motor control device 15 includes a control unit 16 and a three-phase bridge inverter unit 40. The DC-brushless-motor control device 15 supplies a current to windings 21, 22, and 23 of a stator of the three-phase DC brushless motor 20 which rotates a suction fan of the suction apparatus 1. The control unit 16 includes a micro controller unit (MCU) 17 and a driver 18. The MCU 17 includes an operation detection unit (not illustrated) that detects an operation of the operation switch 13. That is, the operation detection unit detects an operation on the suction apparatus 1. The three-phase DC brushless motor 20 includes a magnetic pole position detection unit 25. Based on a magnetic pole position detected by the magnetic pole position detection unit 25 that detects a magnetic pole position of a rotor 24 of the three-phase DC brushless motor 20, the control unit 16 controls a rotation speed of the rotor 24 by controlling each of a conduction state of a first switching element provided on one side of a connection point among switching elements and a conduction state of a second switching element provided on the other side of the connection point among the switching elements, the switching elements being included in each of the arms 41, 42, and 43.

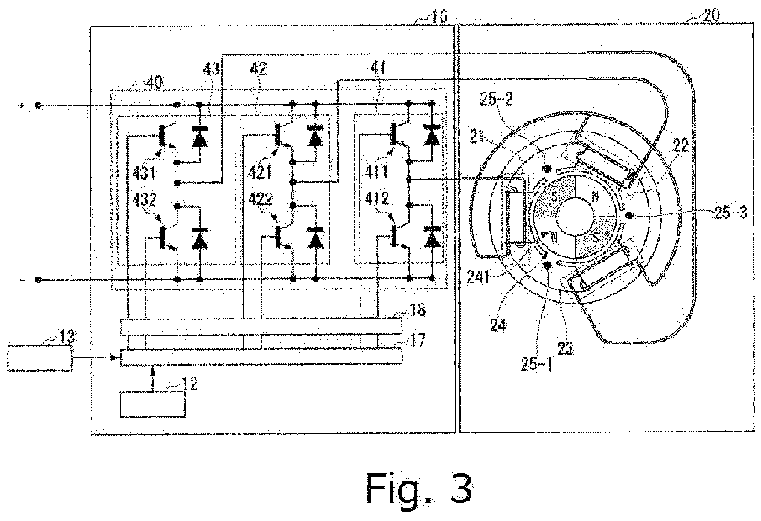

Fig. 3 is a diagram illustrating an example of configurations of the three-phase bridge inverter unit 40 and the three-phase DC brushless motor 20 that are provided in the suction apparatus 1 according to the present embodiment.

The three-phase bridge inverter unit 40 includes an arm 41, an arm 42, and an arm 43. The arm 41 includes a field-effect transistor 411 and a field-effect transistor 412. The arm 42 includes a field-effect transistor 421 and a field-effect transistor 422. The arm 43 includes a field-effect transistor 431 and a field-effect transistor 432. That is, the three-phase bridge inverter unit 40 includes the arms 41, 42, and 43 with each of phases, each of which the switching elements are connected to each other in series, and each of which a connection point between the switching elements is connected to one end of each of the windings 21, 22, and 23.

The three-phase DC brushless motor 20 includes a winding 21, a winding 22, a winding 23, a rotor 24, a magnetic pole position detection unit 25-1, a magnetic pole position detection unit 25-2, a magnetic pole position detection unit 25-3, and a permanent magnet 241. The magnetic pole position detection unit 25 is a generic name of the magnetic pole position detection unit 25-1, the magnetic pole position detection unit 25-2, and the magnetic pole position detection unit 25-3. Hereinafter, as long as there is no need to distinguish the magnetic pole position detection unit 25-1, the magnetic pole position detection unit 25-2, and the magnetic pole position detection unit 25-3, the magnetic pole position detection units are collectively referred to as the magnetic pole position detection unit 25.

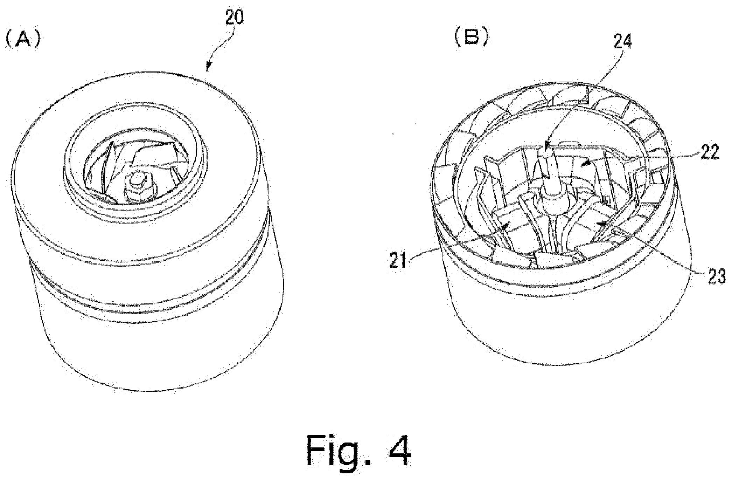

Fig. 4 is a diagram illustrating an example of a structure of the three-phase DC brushless motor 20.

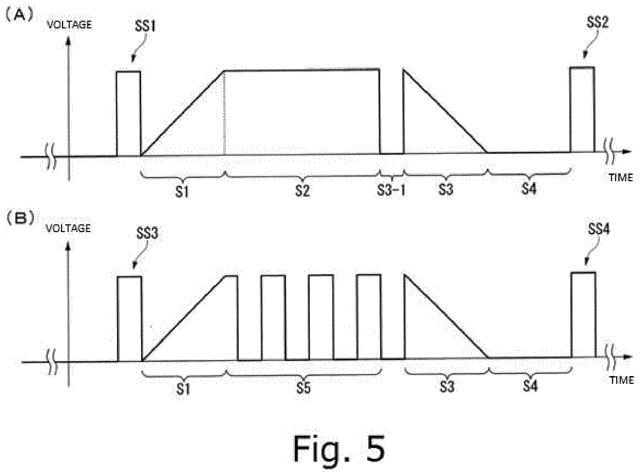

Fig. 5 is a diagram illustrating an example of a voltage waveform for controlling the field-effect transistor 411, the field-effect transistor 421, and the field-effect transistor 431 by the three-phase bridge inverter unit 40. Each of the field-effect transistor 411, the field-effect transistor 421, and the field-effect transistor 431 is an example of a first switching element. In addition, each of the field-effect transistor 412, the field-effect transistor 422, and the field-effect transistor 432 is an example of a second switching element.

Hereinafter, as long as there is no need to distinguish the field-effect transistor 411, the field-effect transistor 421, and the field-effect transistor 431, the field-effect transistors are collectively referred to as the first switching element. Hereinafter, as long as there is no need to distinguish the field-effect transistor 412, the field-effect transistor 422, and the field-effect transistor 432, the field-effect transistors are collectively referred to as the second switching element.

Fig. 5(A) is an example of a voltage waveform for controlling the first switching element by the three-phase bridge inverter unit 40 in a case where a rotation speed of the rotor 24 provided in the three-phase DC brushless motor 20 is equal to or higher than a predetermined rotation speed. The rotation speed of the rotor 24 is calculated by the MCU 17 based on a magnetic pole position detected by the magnetic pole position detection unit 25. In a case where the rotation speed of the rotor 24 is equal to or higher than the predetermined rotation speed, the three-phase bridge inverter unit 40 controls the conduction state of the first switching element based on a plurality of states including a first state S1, a second state S2, a third state S3, and a fourth state S4, in order from the time point when the magnetic pole position detected by the magnetic pole position detection unit 25 reaches a reference position.

In the first state S1, both of the first switching element and the second switching element are in an OFF state. In the second state S2, the first switching element is maintained in an ON state, and the second switching element is maintained in the OFF state. In the third state S3, both of the first switching element and the second switching element are in the OFF state. In the fourth state S4, the first switching element is maintained in the OFF state, and the second switching element is maintained in the ON state. Hereinafter, the control of the first switching element according to the voltage waveform illustrated in Fig. 5(A) is referred to as single pulse control. The DC-brushless-motor control device 15 can reduce a switching loss by the single pulse control.

Fig. 5(B) is an example of a voltage waveform for controlling the first switching element by the three-phase bridge inverter unit 40 in a case where a rotation speed of the rotor 24 provided in the three-phase DC brushless motor 20 is less than a predetermined rotation speed. In this example, the predetermined rotation speed is 20000 revolution per minutes (r/m). In a case where the rotation speed of the rotor 24 is less than the predetermined rotation speed, the three-phase bridge inverter unit 40 controls the conduction state of the first switching element based on the plurality of states including the first state S1, a fifth state S5, the third state S3, and the fourth state S4, in order from the time point when the magnetic pole position detected by the magnetic pole position detection unit 25 reaches the reference position. In the fifth state S5, the first switching element is alternately switched between the ON state and the OFF state while the second switching element is maintained in the OFF state. Hereinafter, the control of the first switching element according to the voltage waveform illustrated in Fig. 5(B) is referred to as pulse width modulation (PWM) control.

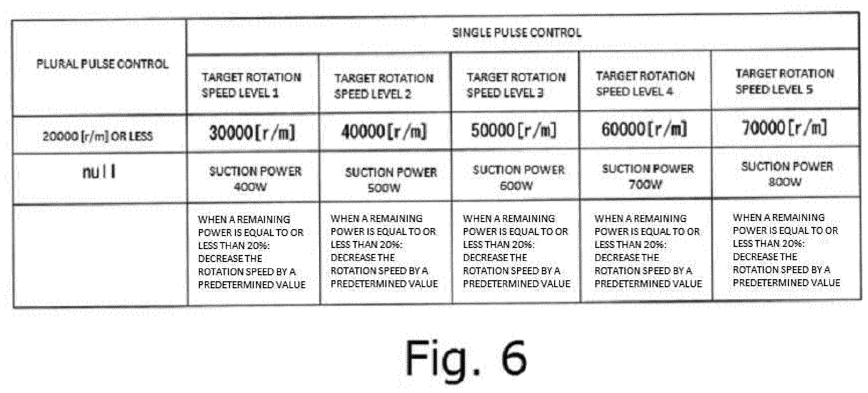

Fig. 6 is a diagram illustrating an example of a relationship between a target rotation speed and the rotation speed of the rotor 24 that the MCU 17 controls by using the three-phase bridge inverter unit 40. The MCU 17 controls the first switching element according to the voltage waveform illustrated in Fig. 5(B) by using the three-phase bridge inverter unit 40 during a period for which the calculated rotation speed of the rotor 24 is less than the predetermined rotation speed. On the other hand, the MCU 17 controls the first switching element according to the voltage waveform illustrated in Fig. 5(A) by using the three-phase bridge inverter unit 40 in a case where the calculated rotation speed of the rotor 24 is equal to or higher than the predetermined rotation speed. Thereby, the DC-brushless-motor control device 15 can achieve both of controllability and efficiency by performing the PWM control with high controllability in a low speed range and performing the single pulse control with high efficiency in a high speed range.

Based on an operation received by the operation switch 13, the MCU 17 reads information indicating a target rotation speed level corresponding to the operation from the storage unit 12. In the storage unit 12, information indicating the target rotation speed of the rotor 24 is stored by being divided into a plurality of rotation speed levels corresponding to the operation detected by the operation detection unit. More specifically, the information indicating the target rotation speed of the rotor 24 is stored in the storage unit 12 by being divided into the plurality of rotation speed levels corresponding to suction force levels of the suction apparatus 1, the suction force level being indicated by the operation detected by the operation detection unit. The target rotation speed level has, for example, five levels of level 1 to level 5. Each of the target rotation speed level is associated with suction power of the suction apparatus 1 according to each of the target rotation speed. The MCU 17 matches the calculated rotation speed of the rotor 24 with the target rotation speed which is read by controlling the first switching element by using the three-phase bridge inverter unit 40. Thereby, the DC-brushless-motor control device 15 can control the three-phase DC brushless motor 20 according to the rotation speed level suitable for a use condition of the suction apparatus 1. For example, in a case where the suction apparatus 1 is a vacuum cleaner, the DC-brushless-motor control device 15 can control the three-phase DC brushless motor 20 according to the rotation speed level suitable for a condition of a floor surface such as a floor, a mat, a carpet, or the like. In a case where the rotation speed of the rotor 24 is equal to or higher than the target rotation speed, the DC-brushless-motor control device 15 may stop the rotation of the rotor 24. Thus, when the rotation speed of the rotor 24 exceeds the target rotation speed for some reason, the DC-brushless-motor control device 15 can automatically stop the rotation of the rotor 24. In a case of Fig. 6, for example, when the rotation speed of the rotor 24 exceeds the target rotation speed of level 5, the DC-brushless-motor control device 15 may perform a control such that the rotor 24 is automatically stopped.

When changing the rotation speed of the rotor 24 according to the target rotation speed level, the MCU 17 changes a duration time of the second state in the single pulse control according to the target rotation speed of the rotor 24. Thereby, the DC-brushless-motor control device 15 can control the rotation speed of the rotor 24 in the single pulse control. Here, the duration time means a time that changes according to the rotation speed of the rotor 24, and does not mean an absolute time. In addition, when changing the duration time of the second state, the MCU 17 performs a control such that the first switching element is switched and the second switching element is not switched.

The suction apparatus 1 may be provided with a battery as an operation power supply of the three-phase DC brushless motor 20. The battery may be, for example, a secondary battery such as a nickel-cadmium battery, a nickel metal hydride battery, or a lithium ion battery. In a case where the three-phase DC brushless motor 20 is operated by the battery, the MCU 17 may change the target rotation speed of the rotor 24 based on remaining power of the battery. That is, the control unit 16 controls the rotation speed of the rotor 24 based on the remaining power of the secondary battery that supplies electric power to the three-phase DC brushless motor 20.

Specifically, in a case where the remaining power of the battery is less than a predetermined threshold value, the MCU 17 controls the rotation speed of the rotor 24 by decreasing the target rotation speed of the rotor 24. The predetermined threshold value may be a value indicating a specific remaining power, and may be a predetermined percentage. In this example, the predetermined threshold value is a predetermined percentage. The predetermined percentage is, for example, 20% of a capacity of the battery. Thereby, the DC-brushless-motor control device 15 can increase a usable time of the suction apparatus 1 in a case where the remaining power of the secondary battery is low. In addition, in a case where the remaining power of the battery is less than the predetermined threshold value, the MCU 17 may perform another processing such as processing of maintaining the target rotation speed to a predetermined value. With this configuration, the DC-brushless-motor control device 15 can increase a usable time of the suction apparatus 1 in a case where the remaining power of the secondary battery is low.

In addition, the MCU 17 may perform a control to switch the target rotation speed of the rotor 24 depending on whether the remaining power of the battery is equal to or greater than the predetermined threshold value or less than the predetermined threshold value. Specifically, in a case where the remaining power of the battery is equal to or greater than the predetermined threshold value, the MCU 17 controls the rotation speed of the rotor 24 without changing the target rotation speed of the rotor 24. In addition, in a case where the remaining power of the battery is less than the predetermined threshold value, the MCU 17 controls the rotation speed of the rotor 24 by decreasing the target rotation speed of the rotor 24. With this configuration, the DC-brushless-motor control device 15 can maintain a predetermined suction force in a case where the remaining power of the battery is equal to or greater than the predetermined threshold value, and can increase an operation time in a case where the remaining power of the battery is less than the predetermined threshold value. That is, the DC-brushless-motor control device 15 can perform, for example, switching between a power maintaining mode and an energy saving mode according to the remaining power of the battery.

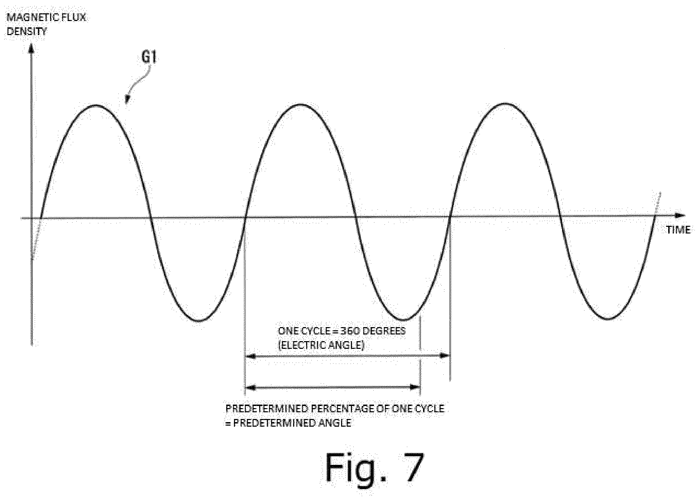

Fig. 7 is a diagram illustrating an example of a cycle of movement of the magnetic pole position detected by the magnetic pole position detection unit 25. The MCU 17 determines whether or not to acquire a signal indicating a magnetic pole position supplied from the magnetic pole position detection unit 25 as a signal to be used for determination of the magnetic pole position, based on a cycle of movement of the magnetic pole position detected by the magnetic pole position detection unit 25. In Fig. 7, a time required for one cycle of electric angles changes according to the rotation speed of the rotor 24. Specifically, the time required for one cycle of electric angles in a case where the rotor 24 rotates at a high speed is shorter than the time required for that in a case where the rotor 24 rotates at a low speed. In addition, when a change rate of the rotation speed of the rotor 24 is within a predetermined range, a change in the time required for one cycle of electric angles is also within a predetermined range. In other words, in a case where the rotor 24 rotates at a high speed of approximately 20000 r/m or more, when a very short period of time extent to which the rotor 24 rotates several times elapses, the change in the time required for one cycle of electric angles is extremely small. Therefore, by calculating the time required for one cycle of electric angles, the MCU 17 can estimate a width of the time required for one cycle of electric angles after an elapse of a very short period of time from the calculated timing. That is, the MCU 17 can estimate which timing the signal indicating the magnetic pole position occurs. The MCU 17 determines that the signal indicating the magnetic pole position occurred at a timing within the width of the estimated time required for one cycle of electric angles, among the signals indicating the magnetic pole positions, is non-noise. The MCU 17 determines to acquire the signal indicating the magnetic pole position and determined as non-noise, as a signal to be used for determination of the magnetic pole position. In addition, the MCU 17 determines that the signal indicating the magnetic pole position occurred at a timing out of the width of the estimated time required for one cycle of electric angles, among the signals indicating the magnetic pole positions, is noise. The MCU 17 determines not to acquire the signal indicating the magnetic pole position and determined as noise, as a signal to be used for determination of the magnetic pole position.

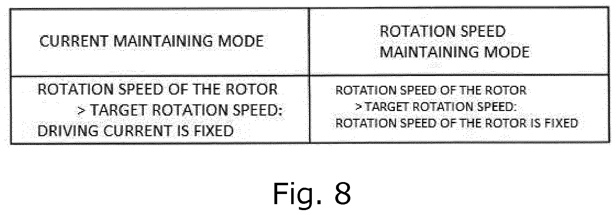

In addition, the MCU 17 can perform a feedback control of the rotation speed of the rotor 24 based on the cycle of movement of the magnetic pole position detected by the magnetic pole position detection unit 25 and the target rotation speed of the rotor 24. For example, the MCU 17 operates according to any operation mode of two operation modes illustrated in Fig. 8. Fig. 8 is a diagram illustrating two operation modes of the MCU 17. The two operation modes are, for example, a current maintaining mode and a rotation speed maintaining mode. In a case where the operation mode of the MCU 17 is the current maintaining mode, the MCU 17 controls the rotation speed of the rotor 24 by feedback of a current value supplied to each of the winding 21, the winding 22, and the winding 23. Specifically, the current value supplied to the winding 21, the winding 22, and the winding 23 is detected by a current sensor (not illustrated). In this case, the MCU 17 calculates a current value to be supplied to the winding 21, the winding 22, and the winding 23, based on a difference between a target current value and the current value of the winding 21, the winding 22, and the winding 23 that is detected by the current sensor. In addition, the MCU 17 supplies a current corresponding to the calculated current value, to the winding 21, the winding 22, and the winding 23.

In addition, in a case where the operation mode of the MCU 17 is the rotation speed maintaining mode, the MCU 17 controls the rotation speed of the rotor 24 by feedback of the rotation speed of the rotor 24. Specifically, the MCU 17 calculates the rotation speed of the rotor 24 based on the cycle of change of the magnetic pole position detected by the magnetic pole position detection unit 25. In addition, the MCU 17 calculates a voltage waveform for supplying a voltage to the winding 21, the winding 22, and the winding 23, based on a difference between a target rotation speed and the calculated rotation speed of the rotor 24. In addition, the MCU 17 supplies a current corresponding to the calculated voltage waveform, to the winding 21, the winding 22, and the winding 23. The MCU 17 controls the rotation speed of the rotor 24 in a case where the rotation speed of the rotor 24 that is indicated by the cycle of movement of the magnetic pole position detected by the magnetic pole position detection unit 25 exceeds the target rotation speed corresponding to the operation detected by the operation detection unit. That is, in a case where the rotation speed of the rotor 24 that is indicated by the cycle of movement of the magnetic pole position detected by the magnetic pole position detection unit 25 exceeds the target rotation speed corresponding to the operation detected by the operation detection unit, the control unit 16 controls the rotation speed of the rotor 24 by feedback of the rotation speed of the rotor 24 or by feedback of the current supplied to the windings 21, 22, and 23. Therefore, by the feedback, the DC-brushless-motor control device 15 can suppress heat generation due to an unintended increase in the rotation speed of the rotor 24 from the target rotation speed as a target upper limit value.

Here, in this example, the operation detected by the operation detection unit is an operation for selecting a suction force level of the suction apparatus. That is, the operation on the suction apparatus is an operation for selecting a suction force level of the suction apparatus. As illustrated in Fig. 6, information indicating the target rotation speed of the rotor 24 is stored in the storage unit by being divided into a plurality of rotation speed levels corresponding to suction force levels of the suction apparatus 1, the suction force level being indicated by the operation detected by the operation detection unit. The MCU 17 reads the information indicating the target rotation speed level corresponding to the suction force level according to the operation detected by the operation detection unit, from the storage unit 12. The MCU 17 matches the rotation speed of the rotor 24 with the target rotation speed which is read. Thereby, the DC-brushless-motor control device 15 can provide an operation using the suction force of the suction apparatus 1, to a user. The suction apparatus 1 is an example of a suction apparatus. Reference Signs List

1: SUCTION APPARATUS
12: STORAGE UNIT
13: OPERATION SWITCH
15: DC-BRUSHLESS-MOTOR CONTROL DEVICE
16: CONTROL UNIT
17: MCU
18: DRIVER
20: THREE-PHASE DC BRUSHLESS MOTOR
21, 22, 23: WINDING
24: ROTOR
25, 25-1, 25-2, 25-3: MAGNETIC POLE POSITION DETECTION UNIT
29: RECTIFICATION UNIT
30: BOOST UNIT
31: FIRST DC-DC CONVERTER
32: SECOND DC-DC CONVERTER
40: THREE-PHASE BRIDGE INVERTER UNIT
241: PERMANENT MAGNET
411, 412, 421, 422, 431, 432: FIELD-EFFECT TRANSISTOR

## Claims

1. A DC-brushless-motor control device that supplies a current to windings of a stator of a three-phase DC brushless motor which rotates a suction fan of a suction apparatus, the device comprising:
a three-phase bridge inverter unit that includes arms with each of phases, each of which switching elements are connected to each other in series and each of which a connection point between the switching elements is connected to one end of each of the windings;
a control unit that controls a rotation speed of a rotor by controlling each of a conduction state of a first switching element among the switching elements and a conduction state of a second switching element among the switching elements based on a magnetic pole position detected by a magnetic pole position detection unit which detects a magnetic pole position of the rotor of the three-phase DC brushless motor, the first switching element being provided on one side of the connection point, the second switching element being provided on the other side of the connection point, and the switching elements being included in each of the arms;
an operation detection unit that detects an operation on the suction apparatus; and
a storage unit in which information indicating a target rotation speed of the rotor is stored by being divided into a plurality of rotation speed levels corresponding to the operation detected by the operation detection unit,
wherein the control unit controls the rotation speed of the rotor by feedback of the rotation speed of the rotor or by feedback of the current value supplied to the windings in a case where the rotation speed of the rotor that is indicated by a cycle of movement of the magnetic pole position detected by the magnetic pole position detection unit exceeds the target rotation speed corresponding to the operation detected by the operation detection unit.

2. The DC-brushless-motor control device according to Claim 1,
wherein the operation on the suction apparatus is an operation for selecting a suction force level of the suction apparatus, and
wherein the information indicating the target rotation speed of the rotor is stored in the storage unit by being divided into the plurality of rotation speed levels corresponding to the suction force levels of the suction apparatus, the suction force level being indicated by the operation detected by the operation detection unit.

3. The DC-brushless-motor control device according to Claim 1 or 2,
wherein the control unit controls the rotation speed of the rotor based on remaining power of a secondary battery that supplies electric power to the three-phase DC brushless motor.

4. The DC-brushless-motor control device according to Claim 3,
wherein, in a case where the remaining power of the secondary battery is less than a predetermined threshold value, the control unit controls the rotation speed of the rotor by decreasing the rotation speed of the rotor from the target rotation speed stored in the storage unit, and in a case where the remaining power of the secondary battery is equal to or higher than the predetermined threshold value, the control unit controls the rotation speed of the rotor according to the target rotation speed stored in the storage unit.
